# EUROPEAN PATENT APPLICATION

(11) **EP 4 378 567 A1**
(43) Date of publication of application: **05.06.2024**
(21) Application number: 22849455.5
(22) Date of filing: 25.07.2022
(51) Int. Cl.: B01D 61/00, C01F 1/00, C01B 32/60, C02F 1/44

(54) **CARBONATE PRODUCTION APPARATUS AND CARBONATE PRODUCTION METHOD**

(30) Priority: 26.07.2021 JP 2021122058; 12.11.2021 JP 2021185226
(71) Applicant: Sumitomo Heavy Industries, Ltd., Tokyo 141-6025 (JP)
(72) Inventor: HIRATA Kazuhiro, Yokosuka-shi, Kanagawa 237-8555 (JP)
(74) Representative: Louis Pöhlau Lohrentz
(86) International application number: PCT/JP2022/028675
(87) International publication number: WO 2023/008394

(57) **Abstract**

An object of the present invention is to provide a carbonate production apparatus and a carbonate production method that produce a carbonate from a solution containing carbon dioxide and alkaline earth metal ions with less energy than concentration by heating and evaporation. In order to solve the above problem, there are provided a carbonate production apparatus including: a concentration unit that concentrates water to be treated containing carbon dioxide and alkaline earth metal ions by osmosis using a semi-permeable film, and a carbonate production method. Accordingly, it is possible to produce a carbonate from a solution containing carbon dioxide and alkaline earth metal ions with less energy than concentration by heating and evaporation.

## Description

### Technical Field

The present invention relates to an apparatus for producing a carbonate from a solution containing carbon dioxide and alkaline earth metal ions, and a method for producing the same.

### Background Art

In recent years, the problem of carbon dioxide is regarded as a major cause of global warming, and this problem becomes an urgent task to suppress the emission of carbon dioxide into the environment worldwide. Therefore, in order to reduce the amount of carbon dioxide in the atmosphere, it is studied to immobilize carbon dioxide by using a carbonate.

Paragraph 0003 of PTL 1 describes that when seawater is evaporated, usually, calcium carbonate, which is a carbonate, precipitates.

### Citation List

### Patent Literature

[PTL 1] Japanese Unexamined Patent Publication No. 2006-070011

### Summary of Invention

### Technical Problem

As a method for producing a carbonate, as described in PTL 1, when a solution containing carbon dioxide and alkaline earth metal ions, such as seawater, is heated to evaporate and concentrated to obtain a carbonate, it is difficult to adopt this method because a large amount of energy is required to evaporate the solution.

Therefore, an object of the present invention is to provide a carbonate production apparatus and a carbonate production method that produce a carbonate from a solution containing carbon dioxide and alkaline earth metal ions with less energy than concentration by heating and evaporation.

### Solution to Problem

As a result of diligent studies on the above-described problems, the present inventor completed the present invention by finding that a carbonate can be produced by concentrating water to be treated containing carbon dioxide and alkaline earth metal ions by using a concentration unit.

In other words, the present invention provides the following carbonate production apparatus and carbonate production method.

In order to solve the above problem, a carbonate production apparatus of the present invention includes a concentration unit that concentrates water to be treated containing carbon dioxide and alkaline earth metal ions by osmosis using a semi-permeable film.

According to the carbonate production apparatus of the present invention, since concentration is performed by osmosis using a semi-permeable film, the water to be treated can be concentrated with less energy than in the case where the water to be treated is heated and evaporated to concentrate, and there is an effect that carbonate can be obtained.

In addition, according to an embodiment of the carbonate production apparatus of the present invention, the concentration unit performs concentration by osmosis in multiple steps of a first step and a second step, the first step includes a first concentration step of concentrating the water to be treated to produce a first concentrated liquid, and the second step includes a second concentration step of concentrating the first concentrated liquid to produce a second concentrated liquid.

According to this carbonate production apparatus, by performing concentration in multiple steps, compared to the case where the water to be treated is concentrated into the second concentrated liquid in multiple steps, the pressure applied to the water to be treated at once can be reduced, and there is an effect of performing concentration with less energy.

Furthermore, according to an embodiment of the carbonate production apparatus of the present invention, the concentration unit includes a first flow path and a second flow path partitioned via the semi-permeable film, the first flow path and the second flow path are connected to each other such that the water to be treated passes through the first flow path and then passes through the second flow path, and the water to be treated is concentrated in the first flow path.

According to this carbonate production apparatus, the water to be treated passes through the flow path, and accordingly, the water molecules of the water to be treated flowing through the first flow path can permeate the side of the water to be treated flowing through the second flow path. Therefore, it is possible to provide an apparatus having a simple structure in which the water to be treated flowing through the first flow path is concentrated by the semi-permeable film.

Furthermore, according to an embodiment of the carbonate production apparatus of the present invention, an input part that inputs a concentrated liquid obtained by concentrating seawater into an osmosis water side of the semi-permeable film is provided.

According to this carbonate production apparatus, the concentrated liquid obtained by concentrating seawater is input into the osmosis water side of the semi-permeable film, and thus the concentrated liquid obtained by concentrating the seawater is reused. Accordingly, there is an effect of reducing the environmental burden compared to the case where the concentrated liquid obtained by concentrating seawater is disposed of directly into the ocean.

Furthermore, according to an embodiment of the carbonate production apparatus of the present invention, the concentrated liquid is concentrated by forward osmosis.

According to this carbonate production apparatus, there is an effect that pressurization energy for concentrating seawater is not required as in the case of performing reverse osmosis.

In order to solve the above problem, a carbonate production method of the present invention includes a concentration process of concentrating water to be treated containing carbon dioxide and alkaline earth metal ions by osmosis using a semi-permeable film.

According to the carbonate production method of the present invention, since concentration is performed by osmosis using a semi-permeable film, the water to be treated can be concentrated with less energy than in the case where the water to be treated is heated and evaporated to concentrate, and there is an effect that a method that can obtain carbonate can be achieved.

### Advantageous Effects of Invention

According to the present invention, there are provided a carbonate production apparatus and a carbonate production method that produce a carbonate from a solution containing carbon dioxide and alkaline earth metal ions with less energy than concentration by heating and evaporation.

### Brief Description of Drawings

Figs. 1A and 1B are schematic explanatory views showing an example of an aspect of a carbonate production apparatus according to a first embodiment of the present invention.
Figs. 2A and 2B are schematic explanatory views showing another example of the aspect of the carbonate production apparatus according to the first embodiment of the present invention.
Figs. 3A to 3D are schematic explanatory views showing an example of an aspect of a carbonate production apparatus according to a second embodiment of the present invention.
Figs. 4A and 4B are schematic explanatory views showing a comparative example as an example of the aspect of the carbonate production apparatus according to the second embodiment of the present invention.
Figs. 5A to 5D are schematic explanatory views showing another example of the aspect of the carbonate production apparatus according to the second embodiment of the present invention.
Fig. 6 is a schematic explanatory view showing an example of an aspect of a carbonate production apparatus according to a third embodiment of the present invention.
Fig. 7 is a schematic explanatory view showing an abundance ratio of a carbonic acid substance with a change in pH of fresh water in the present invention.
Fig. 8 is a schematic explanatory view showing a difference in abundance ratio of the carbonic acid substance with a change in pH of fresh water and seawater in the present invention.
Fig. 9 is a schematic explanatory view showing an example of an aspect of a carbonate production apparatus according to a fourth embodiment of the present invention.
Fig. 10 is a schematic explanatory view showing an example of an aspect of a carbonate production apparatus according to a fifth embodiment of the present invention.

### Description of Embodiments

The present invention uses a semi-permeable film that allows water molecules to permeate and does not allow necessary ions to permeate, or makes it difficult for necessary ions to permeate. The semi-permeable film concentrates the water to be treated, which contains dissolved carbon dioxide and alkaline earth metal ions in the liquid to be treated. Accordingly, the carbonate ion concentration is increased by allowing water molecules to permeate and reducing water molecules while not allowing or making it difficult for carbonate ions present in the water to permeate. Accordingly, the carbonate ion reacts with the alkaline earth metal ion to produce a carbonate of alkaline earth metal.

Further, in a case where the water to be treated having a pH of more than 7 is concentrated by the semi-permeable film, the concentrated liquid concentrated by the semi-permeable film has a decrease in water molecules and an increase in the concentration of hydroxide ions. Therefore, as the pH of the concentrated liquid rises, carbonate ions are more likely to be produced, and there is an effect that carbonates of alkaline earth metals are more likely to be produced.

Here, when describing that the carbonate ion is easily produced as the pH of the concentrated liquid rises, in a carbonated water in which carbon dioxide is dissolved, a chemical equilibrium formula as shown in Expression 1 is generally established.

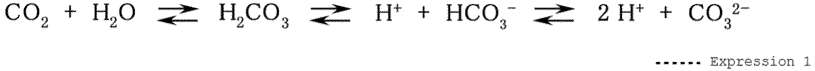

As shown in Expression 1, in carbonated water, a part of carbonic acid (H₂CO₃) is ionized into hydrogen ion (H⁺) and hydrogen carbonate ion (HCO₃⁻).

Then, the hydrogen ion is further ionized from the hydrogen carbonate ion, and accordingly, the carbonate ion (CO₃²⁻) is generated.

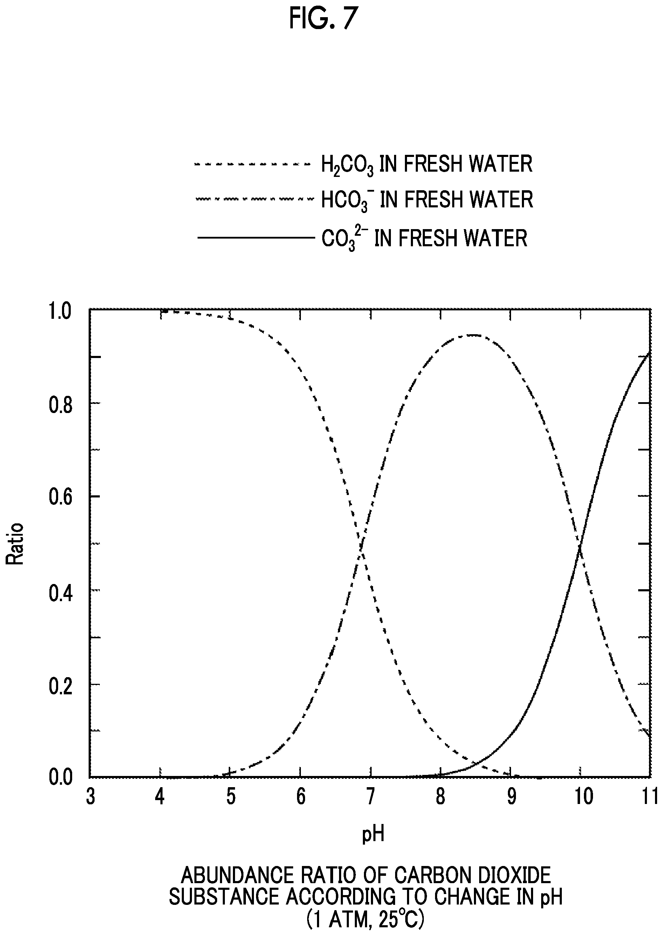

Here, in order to make a state where the abundance ratio of the carbonate ion (CO₃²⁻) is large from the carbonic acid (H₂CO₃) or the hydrogen carbonate ion (HCO₃⁻) in the liquid (carbonated water) in which carbon dioxide is dissolved in pure water, as shown in Fig. 7, it is known that the abundance ratio of carbonate ion (CO₃²⁻) in carbonated water can be increased by increasing the pH.

According to the present invention, by utilizing the above phenomenon, the water to be treated having a pH exceeding 7 is concentrated to raise the pH. Accordingly, by increasing the abundance ratio of carbonate ion (CO₃²⁻), a carbonate of alkaline earth metal can be produced more efficiently.

In addition, according to the present invention, compared to the case where the water to be treated is concentrated by using a semi-permeable film as described above to evaporate water to be treated such as seawater (a method called a simple distillation method or the like) in the related art, and concentrate the water to be treated, there is an effect that the water to be treated can be concentrated with less energy and a carbonate can be obtained.

Specifically, in a case where the moisture in the seawater which is the water to be treated is evaporated and concentrated to obtain a carbonate, while the energy for evaporating the moisture is approximately 626 kWh/m³, the energy in the case of producing pure water from seawater using the semi-permeable film is approximately 0.69 kWh/m³.

In the present invention, it is preferable to introduce water to be treated having a salt concentration on the concentration side and to introduce a liquid having a salt concentration also on the dilution side. In addition, it is more preferable that the salt concentration of the liquid on the dilution side is the same as the salt concentration of the water to be treated on the concentration side. Furthermore, it is more preferable that the salt concentration of the liquid on the dilution side is higher than the salt concentration of the water to be treated on the concentration side.

By having the salt concentration of the liquid on the dilution side, the concentration difference between the salt concentration of the water to be treated on the concentration side and the salt concentration of the liquid on the dilution side becomes small, the water to be treated can be concentrated with less energy, and carbon dioxide can be immobilized. Further, by making the salt concentration of the liquid on the dilution side higher than the salt concentration of the water to be treated on the concentration side, osmotic pressure (forward osmosis) is generated, and the water to be treated on the concentration side can be concentrated with less energy.

Hereinafter, embodiments of the carbonate production apparatus according to the present invention will be described in detail. In addition, the description of the carbonate production method according to the present invention will be replaced with the description related to the operation of the carbonate production apparatus according to the present invention.

In addition, the carbonate production apparatus and the carbonate production method described in the embodiments are merely exemplified in order to describe the carbonate production apparatus and the carbonate production method according to the present invention, and the present invention is not limited thereto.

### [First Embodiment]

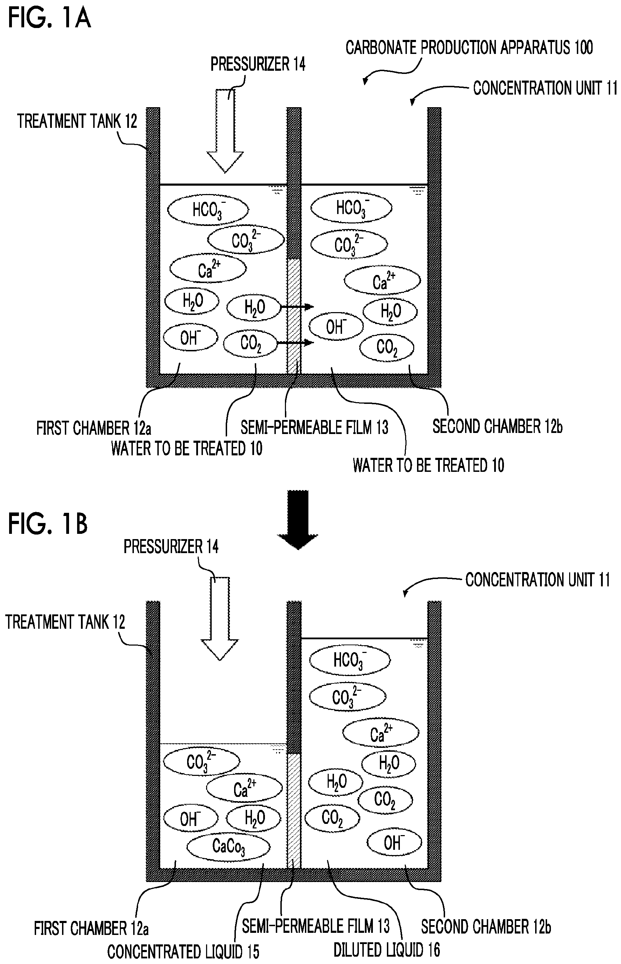

A first embodiment of the present invention will be described with reference to Figs. 1A and 1B. A carbonate production apparatus 100 according to the first embodiment of the present invention includes a concentration unit 11, and the concentration unit 11 concentrates water to be treated 10 to produce a carbonate.

### [Water to be treated]

The water to be treated 10 is an aqueous solution containing carbon dioxide and alkaline earth metal ions, and is not particularly limited as long as the water to be treated 10 is an aqueous solution in which the concentration of carbonate ions, which are carbon dioxide, increases, and the carbonate of alkaline earth metals is likely to be generated when concentrated by a semi-permeable film 13. By increasing the concentration of the carbonate ion, there is an effect that the carbonate of the alkaline earth metal is likely to be generated by reacting with the alkaline earth metal ion.

The carbon dioxide includes carbonic acid (H₂CO₃) in an aqueous solution, hydrogen carbonate ion (HCO₃⁻), carbonate ion (CO₃²⁻) , and carbon dioxide (CO₂) in a gaseous state dissolved in the aqueous solution. Hereinafter, three types of carbonic acid (H₂CO₃), hydrogen carbonate ion (HCO₃⁻), and carbonate ion (CO₃²⁻) are referred to as carbonic acid substances, and carbon dioxide (CO₂) in a gaseous state dissolved in an aqueous solution is referred to as carbon dioxide gas.

In addition, Figs. 1A and 1B illustrate calcium ion (Ca²⁺) as an alkaline earth metal ion.

The water to be treated 10 that can be used in the present embodiment is not particularly limited as long as the water to be treated 10 is an aqueous solution in which carbon dioxide and alkaline earth metal ions are present. The water to be treated 10 may be one in which carbon dioxide is artificially dissolved or a substance that artificially becomes an alkaline earth metal ion is dissolved, or an aqueous solution in which carbon dioxide and alkaline earth metal ion are dissolved from the beginning may be used. Examples thereof include seawater, river water, tap water, pure water, drainage/waste water from a factory, and leachate of a landfill site.

In addition, as the water to be treated 10, in addition to an aqueous solution containing carbon dioxide and alkaline earth metal ions, an aqueous solution having a pH of more than 7.0 is preferably used. The pH of the water to be treated 10 is preferably pH 7.5 or higher, more preferably pH 8.0 or higher.

In a case where the pH of the water to be treated 10 exceeds 7, when the water to be treated 10 is concentrated, water molecules permeate through the semi-permeable film 13 and decrease, whereas the hydroxide ions do not permeate and the concentration thereof increases. Therefore, the concentrated water to be treated 10 has an effect that the pH becomes high and carbonate ions are easily produced.

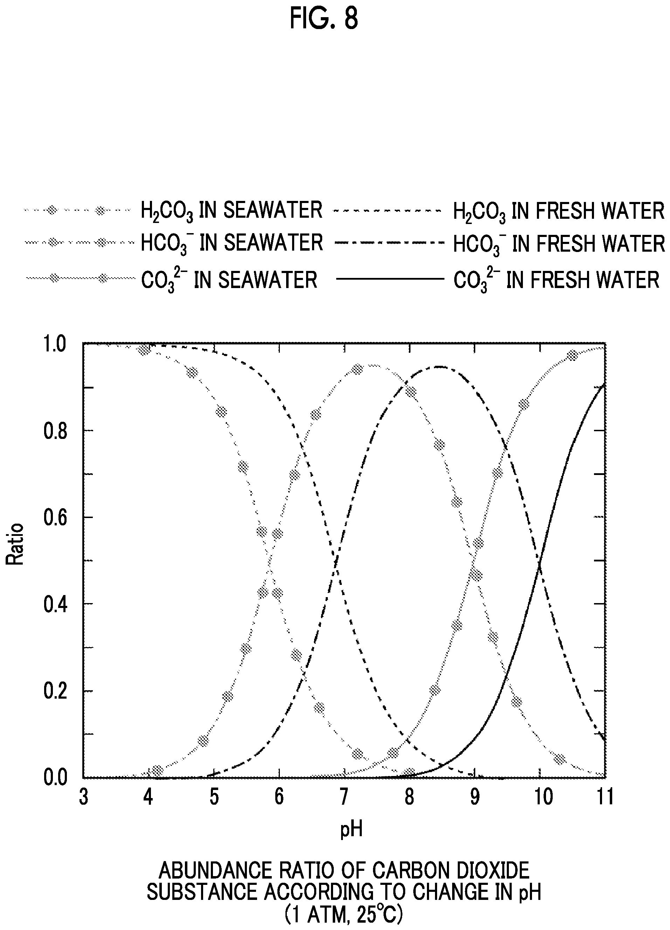

Furthermore, the water to be treated 10 is preferably an aqueous solution containing other salts except the salt of the carbonate ion and the salt of the alkaline earth metal ion. Seawater can be exemplified as the water to be treated 10 containing other salts. Fig. 8 is a diagram showing the abundance ratio of a carbonic acid substance accompanied by a pH change in seawater and pure water that does not contain other salts.

It can be seen that the carbonate ions in seawater start to be produced when the pH is approximately 6.5, while the carbonate ions in pure water which do not contain other salts start to be produced when the pH is approximately 8.

That is, when the pH of the aqueous solution when the other salts are contained and the pH of the aqueous solution when the other salts are not contained are the same, the aqueous solution containing other salts is more likely to produce a large amount of carbonate ions. Therefore, in a case where the water to be treated 10 contains other salts, there is an effect that carbonate ions can be efficiently produced without raising the pH.

In addition, as for the pH at which the carbonate ion starts to be produced, there is a tendency that the carbonate ion starts to be produced at a lower pH as the content of other salts increases.

From the above, as the water to be treated 10, an aqueous solution containing carbon dioxide and alkaline earth metal ions, having a pH of 8.0 or higher, and containing other salts can be preferably used. Specifically, seawater is preferable.

### [Concentration unit]

The carbonate production apparatus 100 includes a concentration unit 11, and the concentration unit 11 includes a treatment tank 12, the semi-permeable film 13, and a pressurizer 14.

### [Treatment tank]

The treatment tank 12 may be composed of any material, shape, and size thereof, as long as the treatment tank 12 can store the water to be treated 10. The treatment tank 12 is divided into a first chamber 12a and a second chamber 12b to be separated by the semi-permeable film 13 described later. In addition, the water to be treated 10 is supplied to each of the first chamber 12a and the second chamber 12b. The water to be treated 10 in the first chamber 12a and the water to be treated 10 in the second chamber 12b are not mixed with each other.

### [Semi-permeable film]

As the semi-permeable film 13, a film having a property of allowing water molecules of the water to be treated 10 to permeate and not allowing necessary ions containing carbonate ions and alkaline earth metal ions contained in the water to be treated 10 to permeate, or a film that makes it difficult for necessary ions to permeate, is used.

In addition, when describing the reason why the semi-permeable film 13 allows water molecules to permeate or does not allow necessary ions contained in the water to be treated 10 to permeate, or makes it difficult for necessary ions to permeate, ions in an aqueous solution causes a phenomenon called hydration, and the ions in the aqueous solution interact with water molecules. Therefore, the ion in the hydrated state is in a state larger than that of a single water molecule that is not in the hydrated state.

The semi-permeable film 13 has pores of a size through which a single water molecule that is not in a hydrated state can pass and pores of a size that ions in a hydrated state cannot pass through. Therefore, even when the hydrated ions try to permeate the semi-permeable film 13 together with the water molecules exhibiting the interaction, the hydrated ions cannot permeate the semi-permeable film 13. On the other hand, a single water molecule that is not in the hydrated state is in a state of being able to pass through the semi-permeable film 13.

For the above reasons, the semi-permeable film 13 allows the water molecules of the water to be treated 10 to permeate, and exhibits a function that necessary ions contained in the water to be treated 10 do not permeate or are difficult to permeate.

Furthermore, the semi-permeable film 13 preferably permeates carbon dioxide in a gaseous state dissolved in an aqueous solution.

In a case where the semi-permeable film 13 permeates carbon dioxide in a gaseous state dissolved in an aqueous solution, the concentration of carbon dioxide in a gaseous state does not increase on the side of the concentrated liquid in which the water to be treated 10 is concentrated. Therefore, carbon dioxide in a gaseous state becomes a carbonic acid substance, it is possible to suppress a decrease in the pH of the concentrated liquid, and it is possible to make a state where carbonate ions are easily produced.

In particular, when water to be treated having a pH exceeding 7 is used as the treated water, due to the synergistic effect of the effect of increasing the pH due to an increase in the concentration of hydroxide ions and the effect of suppressing an increase in the concentration of carbon dioxide gas, there is an effect that it becomes easier to produce carbonate ions.

### [Pressurizer]

The pressurizer 14 is not particularly limited as long as the pressurizer 14 applies pressure to the water to be treated 10 and the semi-permeable film 13 in a first chamber 12a. Examples of the pressurizer 14 include those that apply pressure to the water to be treated 10 by external force, and for example, a method for connecting the first chamber 12a with a pump that sends air, and pressurizing the first chamber 12a by sending air in a sealed state can be exemplified.

The pressurizer 14 pressurizes the water to be treated 10 on the semi-permeable film 13, and thus water molecules permeate from the first chamber 12a to the second chamber 12b, and the water to be treated 10 in the first chamber 12a is concentrated. The water to be treated 10 in the first chamber 12a is a concentrated liquid 15, and the water to be treated 10 in the second chamber 12b is a diluted liquid 16.

### [Operation of carbonate production apparatus]

The operation of the carbonate production apparatus 100 will be described with reference to Figs. 1A and 1B. In the following description, a case where the water to be treated 10 having a pH of more than 7.0 is used, and as the semi-permeable film 13, a film having a property of allowing water molecules and carbon dioxide gas of the water to be treated 10 to permeate and not allowing necessary ions to permeate, or a film that makes it difficult for necessary ions to permeate is used, will be described.

First, as shown in Fig. 1A, the water to be treated 10 is supplied to the treatment tank 12 and is supplied to the first chamber 12a and the second chamber 12b. This step is referred to as a water-to-be-treated supply step.

The first chamber 12a and the second chamber 12b have the same shape, and by inputting the same amount of the water to be treated 10 into each of the first chamber 12a and the second chamber 12b, the water level of the water to be treated 10 in the first chamber 12a and the water level of the water to be treated 10 in the second chamber 12b is set to be the same.

Next, the water to be treated 10 in the first chamber 12a is pressurized by the pressurizer 14. This step is referred to as a pressurization step.

Next, as shown in Fig. 1B, the water to be treated 10 in the first chamber 12a is pressurized, and accordingly, the water molecules and the carbon dioxide gas of the water to be treated 10 pass through the semi-permeable film 13, and move to the side of the second chamber 12b.

At that time, the hydroxide ion, the hydrogen carbonate ion, the carbonate ion, and the alkaline earth metal ion (calcium ion) contained in the water to be treated 10 do not move from the first chamber 12a to the second chamber 12b. In addition, an ion that does not pass through a semi-permeable film 33, such as a hydroxide ion, a hydrogen carbonate ion, a carbonate ion, or an alkaline earth metal ion, or an ion that is difficult to permeate is expressed as an impermeable ion.

Therefore, the impermeable ions remain in the first chamber 12a, and the volume of the water to be treated 10 initially decreases to be in a concentrated state. The concentrated state of the water to be treated 10 in the first chamber 12a is the concentrated liquid 15.

The process in which the concentrated liquid 15 is produced from the water to be treated 10 by the concentration unit 11 corresponds to a concentration step of concentrating the water to be treated to produce a concentrated liquid.

On the other hand, the impermeable ions of the water to be treated 10 in the second chamber 12b do not move from the second chamber 12b to the first chamber 12a. Therefore, the water to be treated 10 in the second chamber 12b is in a state of being diluted by increasing the volume of the initial water to be treated 10 due to the osmosis of water molecules and carbonic acid gas from the first chamber 12a. The diluted state of the water to be treated 10 in the second chamber 12b is the diluted liquid 16.

The process in which the diluted liquid 16 is produced from the water to be treated 10 by the concentration unit 11 corresponds to a dilution step of diluting the water to be treated to produce a diluted liquid.

The concentrated liquid 15 is concentrated from the state of the water to be treated 10, and accordingly, water molecules and carbonic acid gas decrease and the pH rises. Therefore, in the concentrated liquid 15, the abundance ratio of the carbonate ion increases, and the concentrated liquid 15 reacts with the alkaline earth metal ion to produce a carbonate.

Through the above operation, the produced carbonate is recovered, and immobilization of carbon dioxide is realized.

In addition, in the above description of the operation of the carbonate production apparatus 100, a case where the water to be treated 10 having a pH of more than 7.0 is used, and as the semi-permeable film 13, a film having a property of allowing water molecules and carbonic acid gas of the water to be treated 10 to permeate and not allowing necessary ions to permeate, or a film that makes it difficult for necessary ions to permeate is used, was described. However, the present invention is not limited to cases where the water to be treated 10 has a pH of more than 7.

In a case where the water to be treated 10 contains other salts, the pH is 7 or higher, and carbonate ions are present in the water to be treated 10, as the semi-permeable film 13, a film that allows water molecules, carbonic acid gas, and hydrogen ions to permeate and does not allow other necessary ions except hydrogen ions to permeate, or a film through which necessary ions are difficult to permeate may be used and concentrated. As the semi-permeable film 13, a film that allows water molecules, carbonic acid gas, and hydrogen ions to permeate and does not allow other necessary ions except hydrogen ions to permeate, or a film that makes it difficult for necessary ions to permeate is used. Accordingly, since it is possible to suppress the concentration of hydrogen ions on the side of the concentrated liquid 15, it is possible to suppress a decrease in pH, increase the concentration of carbonate ions, and it becomes easier to produce a carbonate of alkaline earth metal.

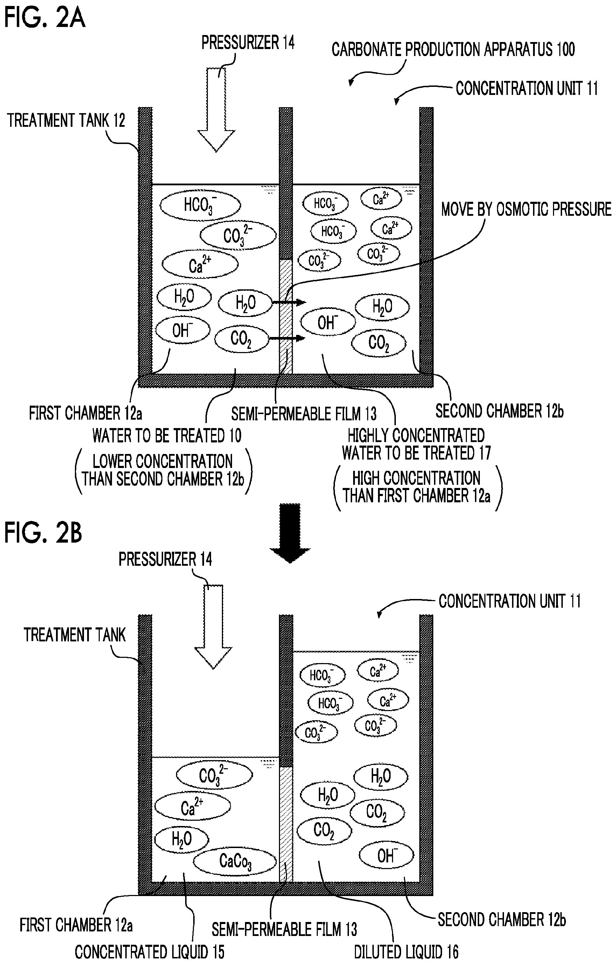

In addition, in the present embodiment, as the water to be treated 10, the same water to be treated 10 is used in the first chamber 12a and the second chamber 12b, and the concentrated liquid 15 and the diluted liquid 16 are produced by the pressurizer 14. However, as shown in Figs. 2A and 2B, the first chamber 12a and the second chamber 12b may have the same shape, the water to be treated 10 may be input into the first chamber 12a, and the same amount of highly concentrated water to be treated 17, which has a higher salt concentration than the water to be treated 10 in the first chamber 12a, as the amount of the water to be treated 10 in the first chamber 12a, may be input into the second chamber 12b. The water level of the first chamber 12a and the water level of the second chamber 12b are the same as each other.

Since the salt concentration in the second chamber 12b is higher than that in the first chamber 12a, the water molecules of the water to be treated 10 in the first chamber 12a permeate (forward osmosis) the side of the second chamber 12b due to the osmotic pressure. Accordingly, the water to be treated 10 in the first chamber 12a is concentrated and can be used as the concentrated liquid 15. In addition, the highly concentrated water to be treated 17 in the second chamber 12b is diluted to become the diluted liquid 16.

As described above, when there is a concentration difference between the water to be treated 10 in the first chamber 12a and the highly concentrated water to be treated 17 in the second chamber 12b to generate an osmotic pressure (forward osmosis), since concentration is performed using osmotic pressure (forward osmosis), concentration can be performed without using the pressurizer 14. Even in such a case, the pressurizer 14 may be used, an osmotic pressure (forward osmosis) is generated, and thus, the pressure applied by the pressurizer 14 can be reduced, and the concentrated liquid 15 and the diluted liquid 16 can be produced with less energy.

### [Second Embodiment]

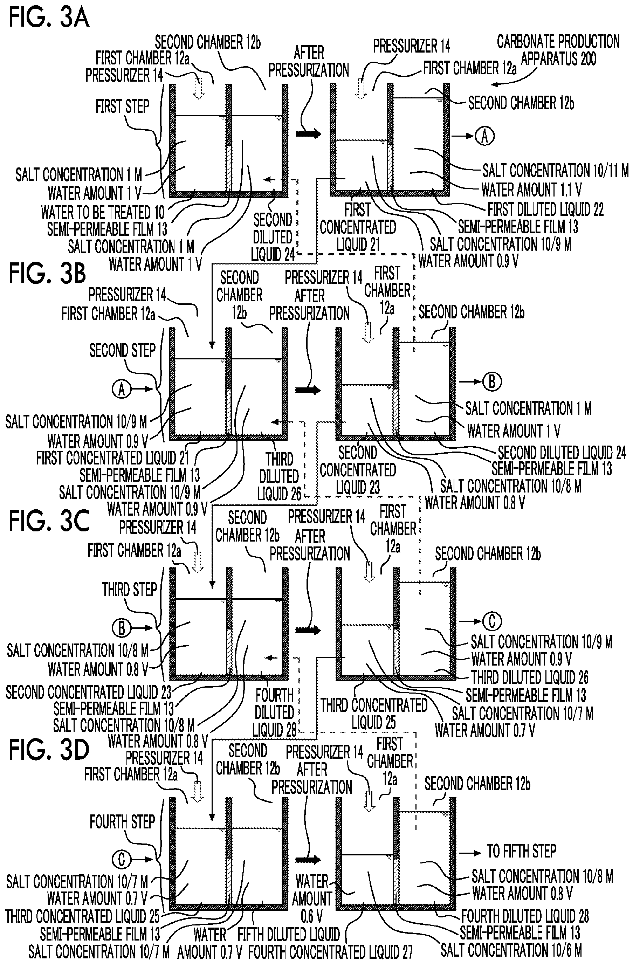

A second embodiment of the present invention will be described with reference to Figs. 3A to 3D. A carbonate production apparatus 200 according to the second embodiment of the present invention has a feature in which the water to be treated is concentrated in multiple steps. Specifically, there are a first step to a fourth step.

In the first step, a first concentrated liquid 21 produced by concentrating the water to be treated 10 is produced. Further, the first concentrated liquid 21 is used in the next second step. In the second step, the second concentrated liquid 23 is produced by introducing the first concentrated liquid 21 into the first chamber 12a and further concentrating the first concentrated liquid 21. As described above, in the second embodiment of the present invention, the concentrated liquid prepared in the previous step is used as the concentrated liquid in the next step.

In addition, in the second embodiment, the diluted liquid produced by the concentration treatment is used in the previous step. That is, in the first step, a second diluted liquid 24 of the next step is introduced into the second chamber 12b and concentrated, thereby producing a first diluted liquid 22. As described above, in the second embodiment of the present invention, the diluted liquid prepared in the next step is used as the diluted liquid in the previous step.

In addition, in the second embodiment of the present invention, those having the same function and structure as the carbonate production apparatus 100 of the first embodiment are designated by the same reference numerals, and the description thereof will be omitted.

### [Concentrated liquid]

The concentrated liquid corresponds to the first concentrated liquid 21, the second concentrated liquid 23, a third concentrated liquid 25, and a fourth concentrated liquid 27. The first concentrated liquid 21 is a liquid in which the water to be treated 10 is concentrated by the concentration unit 11 in the first step.

In addition, the second concentrated liquid 23, the third concentrated liquid 25, and the fourth concentrated liquid 27 correspond to the liquids concentrated in the second step, the third step, and the fourth step.

A process of concentration from the first step to the fourth step is performed, and the concentrated liquid becomes the first concentrated liquid 21, the second concentrated liquid 23, the third concentrated liquid 25, and the fourth concentrated liquid 27, and thus, the salt concentration of the concentrated liquid increases.

### [Diluted liquid]

The diluted liquid corresponds to the first diluted liquid 22, the second diluted liquid 24, a third diluted liquid 26, and a fourth diluted liquid 28.

The first diluted liquid 22 is a liquid in which the water to be treated 10 is diluted by the concentration unit 11 in the first step.

A process of concentration from the first step to the fourth step is performed, and the diluted liquid becomes the first diluted liquid 22, the second diluted liquid 24, the third diluted liquid 26, and the fourth diluted liquid 28, and thus, the salt concentration of the diluted liquid increases.

### [Operation of carbonate production apparatus]

The operation of the carbonate production apparatus 200 will be described.

The carbonate production apparatus 200 of the present invention concentrates the water to be treated 10 by performing the first step to the fourth step.

As shown in Figs. 3A to 3D, assuming that the number of moles of the dissolved salt in the water to be treated 10 is 1, and the initial water amount (volume) of the water to be treated 10 is 1 V (m³), the initial salt concentration of the water to be treated 10 is 1 M. In addition, this means M = mol/m³.

A case will be described in which the water to be treated 10 is pressurized with an amount corresponding to 10% of the initial water amount of the water to be treated 10 to be concentrated in multiple steps.

First, the first step is performed. In the first step, the water to be treated 10 is introduced into the first chamber 12a, and the second diluted liquid 24 is introduced into the second chamber 12b. This process is referred to as a first water-to-be-treated supply step.

After that, similarly to the first embodiment, a pressurization step (referred to as a first pressurization step), a concentration step (referred to as a first concentration step of concentrating the water to be treated 10 to produce a first concentrated liquid), and a dilution step (referred to as a first dilution step) are performed, the first concentrated liquid 21 and the first diluted liquid 22 are produced, and the first step is completed.

Here, when describing the change in the aqueous solution after the first step, the first concentrated liquid 21 is concentrated in a state where the impermeable ions remain, and accordingly, the water amount becomes 0.9 V and the salt concentration becomes 10/9 M. On the other hand, in the first diluted liquid 22, water and carbonic acid gas permeate through the first chamber 12a, the water amount becomes 1.1 V, and the salt concentration becomes 10/11 M.

Next, a second step is performed. In the second step, the first concentrated liquid 21 is introduced into the first chamber 12a, and the third diluted liquid 26 is introduced into the second chamber 12b. This process is referred to as a second water-to-be-treated supply step.

After that, similarly to the first embodiment, a pressurization step (referred to as a second pressurization step), a concentration step (a second concentration step of concentrating the first concentrated liquid to produce a second concentrated liquid), and a dilution step (referred to as a second dilution step) are performed, the second concentrated liquid 23 and the second diluted liquid 24 are produced, and the second step is completed.

Here, when describing the change in the aqueous solution after the second step, the second concentrated liquid 23 is concentrated in a state where the impermeable ions remain, and accordingly, the water amount becomes 0.8 V and the salt concentration becomes 10/8 M. On the other hand, in the second diluted liquid 24, water and carbonic acid gas permeate through the first chamber 12a, the water amount becomes 1.0 V, and the salt concentration becomes 10/10 M.

Hereinafter, similarly, the third step and the fourth step are performed.

In the third step, the second concentrated liquid 23 is introduced into the first chamber 12a, the fourth diluted liquid 28 is introduced into the second chamber 12b (third water-to-be-treated supply step), and then a third pressurization step, a third concentration step, and a third dilution step are performed, and the third concentrated liquid 25 (salt concentration 10/7 M, water amount 0.7 V) and the third diluted liquid 26 (salt concentration 10/9 M, water amount 0.9 V) are produced.

In addition, in the fourth step, the third concentrated liquid 25 is introduced into the first chamber 12a, the fifth diluted liquid (salt concentration 10/7 M, water amount 0.7 V) is introduced into the second chamber 12b (fourth water-to-be-treated supply step), and then a fourth pressurization step, a fourth concentration step, and a fourth dilution step are performed, and the fourth concentrated liquid 27 (salt concentration 10/6 M, water amount 0.6 V) and the fourth diluted liquid 28 (salt concentration 10/8 M, water amount 0.8 V) are produced.

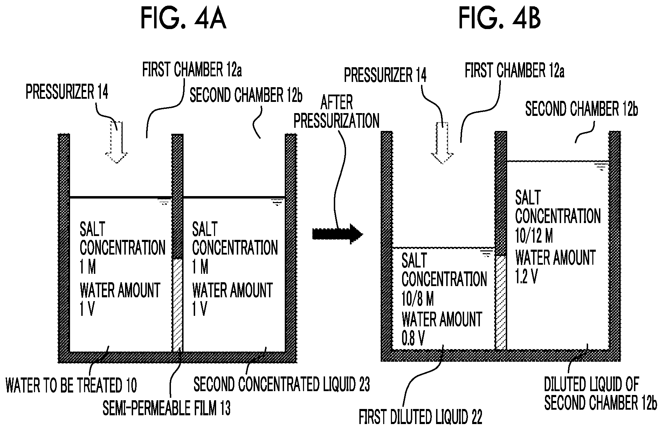

As described above, in the second embodiment of the present invention, by performing concentration in multiple steps, for example, compared to a case where concentration from the water to be treated 10 to the second concentrated liquid 23 is performed by one pressurization without dividing the concentration into multiple steps, there is an effect of performing concentration with less energy. That is, as shown in Figs. 4A and 4B, when concentrating the water to be treated 10 (salt concentration 1 M, water amount 1 V) to the salt concentration of the second concentrated liquid (salt concentration 10/8 M, water amount 0.8 V) using the pressurizer 14 at once, there is a large difference in salt concentration between the concentrated liquid in the first chamber 12a (salt concentration 10/8 M, water amount 0.8 V) and the diluted liquid in the second chamber 12b (salt concentration 10/12 M, water amount 1.2 V). Therefore, a larger pressure is required as compared with a case where the concentration is performed in multiple steps of the first step and the second step.

In addition, there is an effect that the pressure applied to the water to be treated 10 and the first concentrated liquid 21 at once can be reduced. That is, even when a large-scale pressurizer 14 that can apply high pressure is not used, it is possible to concentrate the water to be treated 10, and by the concentration, it is possible to increase the pH, produce carbonate ions, and produce carbonates.

In addition, in the present embodiment, the case where the first step to the fourth step is included was exemplified. However, the steps such as the fifth step and the sixth step, and the above steps may be repeated to concentrate to a target salt concentration.

In addition, in the present embodiment, in the second to fourth water-to-be-treated supply steps, the case where the concentrated liquid of the previous step is introduced into the first chamber 12a, and the diluted liquid produced in the next step is introduced into the second chamber 12b was exemplified. However, as long as the salt concentration of the concentrated liquid in the first chamber 12a and the salt concentration of the diluted liquid in the second chamber 12b are the same concentration, the diluted liquid produced in the next step may not be used.

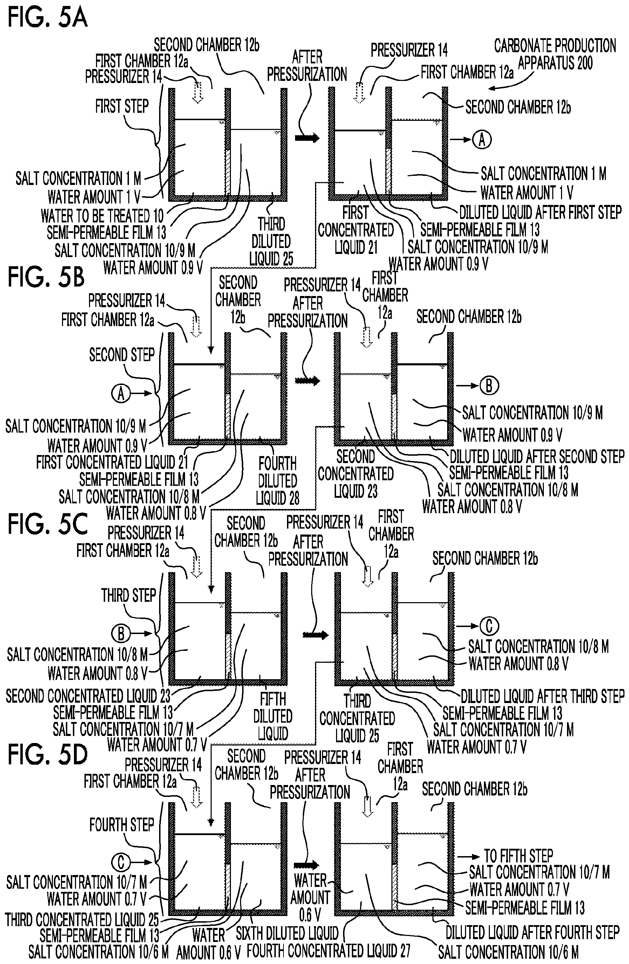

In addition, as shown in Figs. 5A to 5D, the water to be treated 10 (salt concentration 1 M, water amount 1 V) is introduced into the first chamber 12a, and the third diluted liquid (salt concentration 10/9 M, water amount 0.9 V) may be introduced into the second chamber 12b. The salt concentration of the concentrated liquid in the first chamber 12a is lower than the salt concentration of the diluted liquid in the second chamber 12b, an osmotic pressure (forward osmosis) is generated from the first chamber 12a toward the second chamber 12b, and accordingly, the pressure of the pressurizer 14 can be reduced. Therefore, it is possible to perform concentration with less energy.

In addition, since the water molecules of the water to be treated 10 (first chamber 12a) move toward the second chamber 12b due to the osmotic pressure (forward osmosis) and are concentrated, the pressurizer 14 may not be used.

In addition, in the case of first treating the water to be treated 10, in the first step, in the case where the second diluted liquid 24 is not present, instead of the second diluted liquid 24 input into the second chamber 12b of the carbonate production apparatus 200, the water to be treated 10 is input to perform the treatment. Then, the produced first concentrated liquid 21 is input separately into the first chamber 12a and the second chamber 12b in the second step, the second diluted liquid 24 produced by the treatment is used in the first step, and accordingly, the diluted liquid can be reused.

### [Third Embodiment]

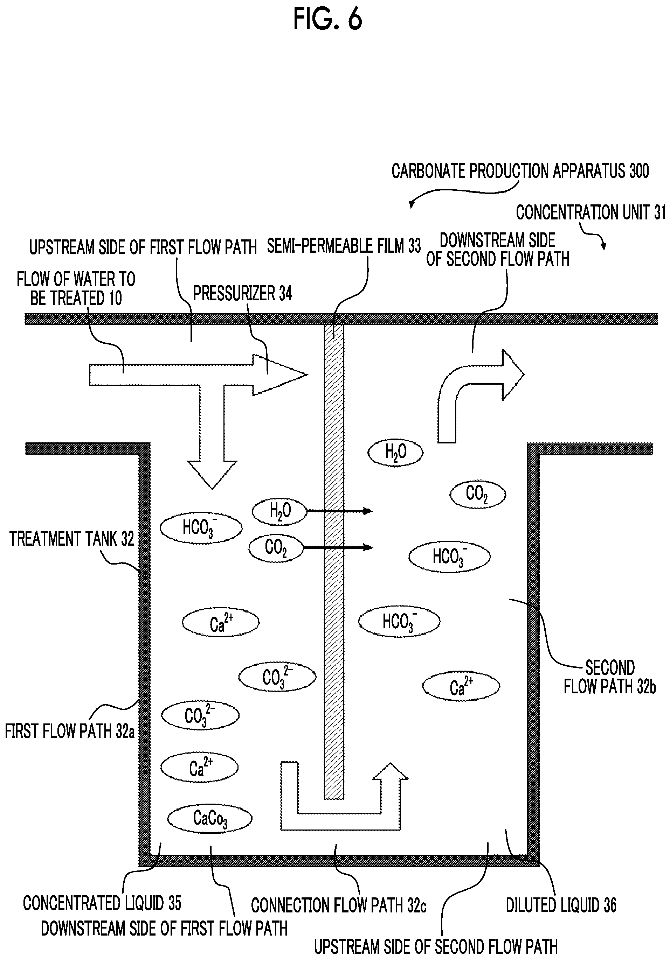

Embodiment 3 of the present invention will be described with reference to Fig. 6. A carbonate production apparatus 300 according to the third embodiment of the present invention is a carbonate production apparatus 300 including a concentration unit 31, in which the concentration unit 31 includes a first flow path 32a and a second flow path 32b, and the water to be treated 10 in the first flow path 32a is concentrated.

Specifically, in the carbonate production apparatus 300, the concentration unit 31 includes the first flow path 32a and the second flow path 32b partitioned via the semi-permeable film 33, the first flow path 32a and the second flow path 32b are connected to each other such that the water to be treated 10 passes through the first flow path 32a and then passes through the second flow path 32b, and the water to be treated 10 of the first flow path 32a is concentrated.

In addition, in the third embodiment of the present invention, those having the same function and structure as the carbonate production apparatus 100 of the first embodiment are designated by the same reference numerals, and the description thereof will be omitted.

### [Treatment tank]

A treatment tank 32 may be composed of any material, shape, and size thereof, as long as the treatment tank 32 can store the water to be treated 10. The treatment tank 32 is divided into the first flow path 32a and the second flow path 32b to be separated by the semi-permeable film 33 described later. In addition, the treatment tank 32 has a connection flow path 32c that connects the first flow path 32a and the second flow path 32b to each other. The first flow path 32a, the connection flow path 32c, and the second flow path 32b are connected to each other, and the water to be treated 10 passes through the first flow path 32a and then flows in order through the connection flow path 32c and through the second flow path 32b. The first flow path 32a, the second flow path 32b, and the connection flow path 32c are collectively referred to as a flow path.

### [Semi-permeable film]

As the semi-permeable film 33, one having the same properties as the semi-permeable film 13 of the first embodiment of the present invention can be used.

The semi-permeable film 33 is disposed to partition the first flow path 32a and the second flow path 32b. As the water to be treated 10 flows from the upstream side of the first flow path 32a toward the downstream side of the first flow path 32a, the water molecules and the carbonic acid gas of the water to be treated 10 of the first flow path 32a permeate to the side of the second flow path 32b, and the concentration is performed. The downstream side of the first flow path 32a is a concentrated liquid 35. In addition, the water to be treated 10 flowing through the second flow path 32b is the diluted liquid 36.

### [Pressurizer]

The pressurizer 34 is not particularly limited as long as the pressurizer 34 pressurizes the water to be treated 10 to the semi-permeable film 33. As the pressurizer 34, for example, a pressurizer that applies a water flow to the water to be treated 10 can be exemplified. The water to be treated 10 to which the water flow is applied is supplied to the first flow path 32a to collide with the semi-permeable film 33, thereby pressurizing the water to be treated 10 on the semi-permeable film 33. Specifically, a method can be used in which a pump that gives a water flow to the water to be treated 10 or an ocean wave causes the water to be treated 10 to collide (pressurize) the semi-permeable film 33, or a carbonate production apparatus 300 is attached to the ship, and the propulsion of the ship causes the semi-permeable film 33 to collide with the water to be treated 10 such as seawater and pressurizes the water to be treated 10.

### [Operation of carbonate production apparatus]

The operation of the carbonate production apparatus 300 will be described.

First, the water to be treated 10 is supplied to the treatment tank 32 and is supplied to the first flow path 32a. This step is referred to as a water-to-be-treated inflow step. In addition, the water to be treated 10 is continuously supplied to the flow path.

In addition, when the water to be treated 10 is supplied to the first flow path 32a, the water to be treated 10 is supplied by the pressurizer 34 to collide with the semi-permeable film 33. This step is referred to as an inflow pressurization step.

Next, as shown in Fig. 6, the water to be treated 10 on the upstream side in the first flow path 32a is pressurized to the semi-permeable film 33, and accordingly, the water molecules and the carbonic acid gas of the water to be treated 10 pass through the semi-permeable film 33, and permeate and move to the downstream side of the second flow path 32b.

At that time, the impermeable ions contained in the water to be treated 10 do not move from the first flow path 32a to the second flow path 32b.

Therefore, the impermeable ion remains in the first flow path 32a, and the concentration of the impermeable ion becomes higher toward the downstream side of the first flow path. That is, the water to be treated 10 flowing through the first flow path 32a is concentrated from the upstream side to the downstream side of the first flow path 32a, and the concentration of carbonate ions increases.

Therefore, the concentrated liquid 35 having a higher salt concentration on the downstream side than on the upstream side of the first flow path 32a is used, and the carbonate ion concentration increases on the downstream side of the first flow path 32a to produce a carbonate.

After that, the concentrated liquid 35 flows to the second flow path 32b to pass through the connection flow path 32c and be pushed out. Since the concentrated liquid 35 is supplied to the second flow path 32b such that the concentrated liquid 35 is pushed out, the liquid in a state where the concentration of the impermeable ion is high is supplied from the upstream side of the second flow path 32b and flows to the downstream side. At that time, the water molecules and the carbonic acid gas of the water to be treated 10 in the first flow path separated by the semi-permeable film 33 are in a state of permeating through the second flow path toward the downstream side of the second flow path 32b. Therefore, the salt concentration of the second flow path 32b is lower on the downstream side than on the upstream side.

As described above, in the carbonate production apparatus 300, a carbonate production apparatus in which the water to be treated 10 can be continuously concentrated by supplying the water to be treated 10 to pressurize the water to be treated 10 to the semi-permeable film 33 of the concentration unit 31, and a carbonate can be produced with a simple structure.

In addition, in the present embodiment, the pressurizer 34 is used, but the pressurizer 34 may not be used. Even when the pressurizer 34 is not used, in a case where the salt concentration of the water to be treated 10 flowing through the first flow path 32a separated by the semi-permeable film 33 is lower than the salt concentration of the water to be treated 10 flowing through the second flow path 32b, the concentration of the water to be treated 10 flowing through the first flow path 32a by the osmotic pressure (forward osmosis) is performed, and thus the pressurizer 34 can be used as unnecessary carbonate production apparatus 300, can be concentrated with less energy, and a carbonate can be produced.

That is, as the carbonate production apparatus 300, an apparatus having a simple structure in which the water to be treated 10 passes through the flow path and thus water molecules can permeate to the side of the water to be treated 10 flowing through the second flow path 32b having a higher salt concentration than the water to be treated 10 flowing through the first flow path 32a, and accordingly, the processed water flowing through the first flow path 32a is concentrated by a semi-permeable film 33.

### [Fourth Embodiment]

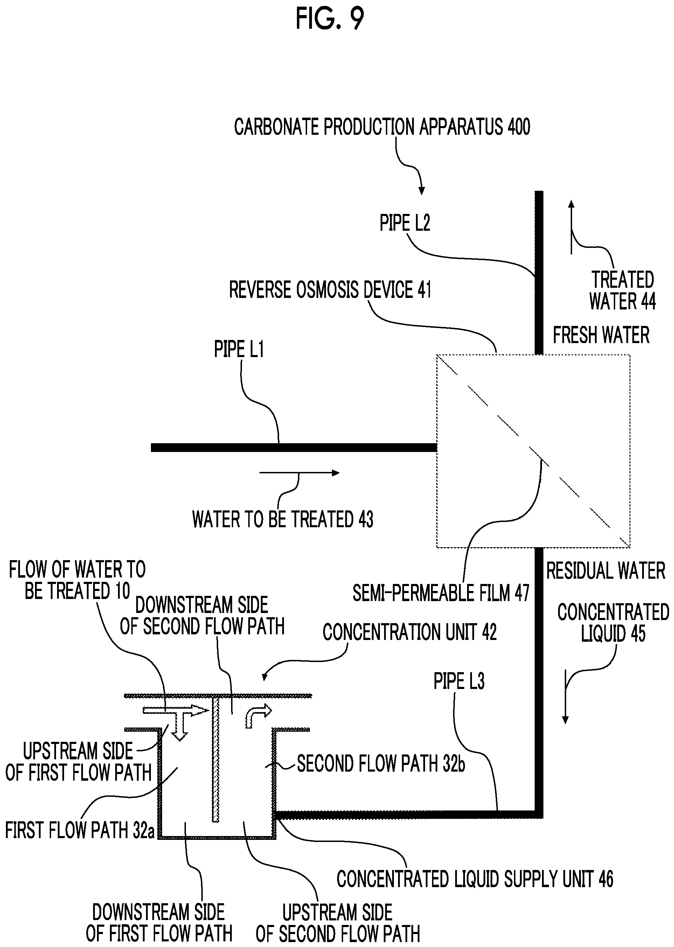

Embodiment 4 of the present invention will be described with reference to Fig. 9. A carbonate production apparatus 400 according to the fourth embodiment of the present invention includes a reverse osmosis device 41 and a concentration unit 42. The carbonate production apparatus 400 according to the fourth embodiment of the present invention is used for producing a carbonate by supplying the concentrated liquid 45, which is the residual water produced by the reverse osmosis device 41, to the concentration unit 42.

In addition, in the fourth embodiment of the present invention, those having the same function and structure as the carbonate production apparatus 300 of the third embodiment are designated by the same reference numerals, and the description thereof will be omitted.

### [Reverse osmosis device]

The reverse osmosis device 41 is a device that removes water molecules from the water to be treated 43 and performs concentration, and examples thereof include a device that produces fresh water from seawater. The reverse osmosis device 41 is supplied with the water to be treated 43 in a state where unnecessary impurities are removed when the fresh water is produced from the seawater by a pretreatment device (not shown). In addition, the reverse osmosis device 41 is a device in which the water to be treated 43 is supplied from the pipe L1 to the semi-permeable film 47 of the reverse osmosis device 41 in a pressurized state by a pressurizing pump (not shown), and accordingly, the water to be treated 43 is caused to permeate to produce fresh water (treated water 44) and the residual water (concentrated liquid 45) from the water to be treated 43.

The fresh water of the treated water 44 is supplied to the consumption place through a pipe L2. In addition, the residual water of the concentrated liquid 45 is supplied to the concentration unit 42 through a pipe L3.

As the semi-permeable film 47, a known semi-permeable film used in the fresh water production apparatus is used, and for example, the same semi-permeable film 13 as described in Embodiment 1 of the present invention is used.

### [Concentration unit]

The concentration unit 42 has the same function as the concentration unit 31 of the carbonate production apparatus 300 of the third embodiment, and further includes a concentrated liquid supply unit 46. The concentrated liquid supply unit 46 is a part that supplies the concentrated liquid 45 to the second flow path 32b of the concentration unit 42. The concentrated liquid supply unit 46 is provided on the upstream side of the second flow path 32b. In addition, preferably, the concentrated liquid supply unit 46 is provided at a location where the salt concentration of the diluted liquid 36 flowing through the second flow path 32b and the salt concentration of the concentrated liquid 45 are substantially the same as each other.

In the carbonate production apparatus 400 according to the fourth embodiment of the present invention, the concentrated liquid 45, which is the residual water produced when fresh water is produced from seawater, is used in the concentration unit 42, and thus there is an effect of reducing the environmental burden than when the residual water is disposed of in the ocean or river. In addition, by supplying the concentrated liquid 45 to the upstream side of the second flow path 32b, the concentration efficiency of the concentration unit 42 can be improved.

### [Operation of carbonate production apparatus]

The operation of the carbonate production apparatus 400 will be described.

First, the water to be treated 43 is supplied to the reverse osmosis device 41. This step is defined as a step of supplying the water to be treated to the reverse osmosis device.

Next, the water to be treated 43 is permeated by the semi-permeable film 47 of the reverse osmosis device 41 to produce the treated water 44 (fresh water) and the residual water (concentrated liquid 45). This step is referred to as a pressurization osmosis treatment step.

Next, the concentrated liquid 45 is supplied to the concentration unit 42. This process is referred to as a concentrated liquid supply step.

In addition, the concentration unit 42 performs the same operation as the carbonate production apparatus 300 of the third embodiment, and performs the water-to-be-treated inflow step and the inflow pressurization step. Then, the concentrated liquid 45 is supplied from the concentrated liquid supply unit 46 to the diluted liquid 36 produced in the concentration unit 42. By supplying the concentrated liquid 45 to the diluted liquid 36, the salt concentration of the diluted liquid 36 can be maintained high toward the downstream side, and thus the water to be treated 10 flowing through the first flow path 32a can maintain a state where the water to be treated 10 is easy to concentrate by forward osmosis, and the concentration efficiency of the water to be treated 10 can be improved.

In the embodiment of the present invention, a case where the concentrated liquid supply unit 46 is provided at a location where the salt concentration of the diluted liquid 36 flowing through the second flow path 32b and the salt concentration of the concentrated liquid 45 are substantially the same as each other to supply the concentrated liquid 45 to dilution water 38 was described. However, the concentrated liquid supply unit 46 is provided in the second flow path 32b, and further, a control unit and a regulating tank are installed between the pipe L3, the salt concentration of the concentrated liquid 45 and the salt concentration of the diluted liquid 36 flowing in the vicinity of the concentrated liquid supply unit 46 are measured, and based on the measurement result of the salt concentrations thereof, the control unit may regulate the salt concentration of the concentrated liquid 45 in the regulating tank or regulate the amount of the concentrated liquid 45 supplied from the concentrated liquid supply unit 46 to the diluted liquid 36.

### [Fifth Embodiment]

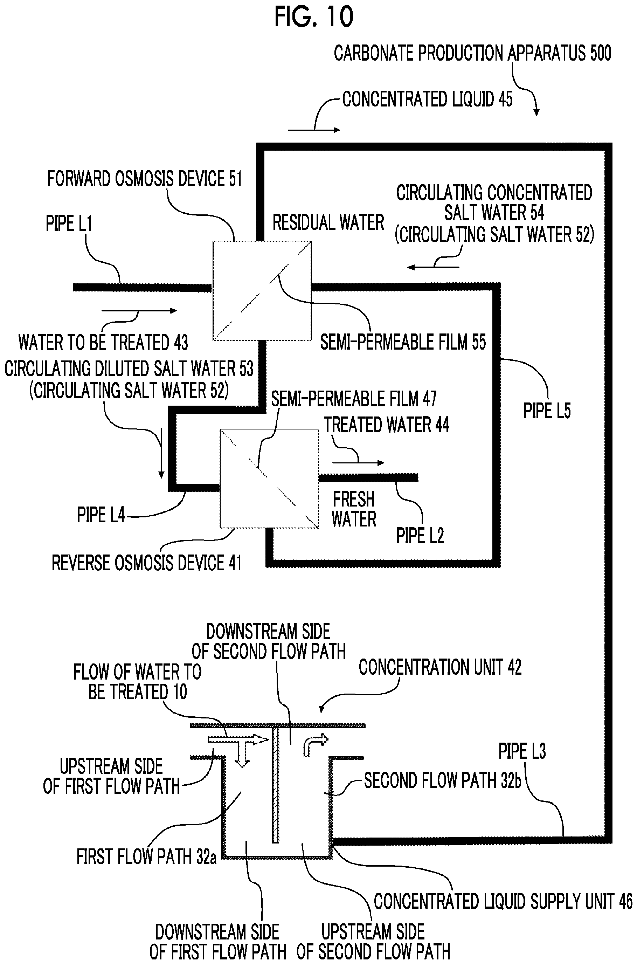

Embodiment 5 of the present invention will be described with reference to Fig. 10. A carbonate production apparatus 500 according to the fifth embodiment of the present invention includes a forward osmosis device 51 in the carbonate production apparatus 400 according to the fourth embodiment of the present invention, and has pipes L4 and L5 connecting the forward osmosis device 51 and the reverse osmosis device 41 to each other.

The carbonate production apparatus 500 according to the fifth embodiment of the present invention is used for producing a carbonate by supplying the concentrated liquid 45, which is the residual water produced by the forward osmosis device 51, to the concentration unit 42.

In addition, circulating salt water 52 is repeatedly treated with circulating diluted salt water 53 and circulating concentrated salt water 54 between the forward osmosis device 51 and the reverse osmosis device 41, and accordingly, the treated water 44 (fresh water) is produced by the reverse osmosis device 41 via the circulating salt water 52 from the water to be treated 43 input into the forward osmosis device 51.

### [Forward osmosis device]

The forward osmosis device 51 has a semi-permeable film 55, and the semi-permeable film 55 has a space separated by a concentration side and a dilution side. The water to be treated 43 is supplied to the concentration side, and the circulating concentrated salt water 54 is supplied to the dilution side. The forward osmosis device 51 may be any device as long as the water molecules of the water to be treated 43 pass through the semi-permeable film 55 and move to the circulating concentrated salt water 54, and the residual water is produced by concentrating the water to be treated 43 and the circulating diluted salt water 53 by diluting the circulating concentrated salt water 54.

The salt concentration of the water to be treated 43 supplied to the forward osmosis device 51 is preferably lower than the salt concentration of the circulating concentrated salt water 54 supplied to the forward osmosis device 51. In this case, the water molecules of the water to be treated 43 can be moved to the circulating concentrated salt water 54 with less energy due to the forward osmosis due to the difference in salt concentration.

In addition, a pressurizing pump may be provided in a pipe L1 to supply the water to be treated 43 to pressurize the semi-permeable film 55, and in this case, with the pressure of forward osmosis and the pressure of pressurization, the supply of water molecules can be performed efficiently from the water to be treated 43 to the circulating concentrated salt water 54.

In addition, the salt concentration of the water to be treated 43 supplied to the forward osmosis device 51 may be higher than the salt concentration of the circulating concentrated salt water 54 supplied to the forward osmosis device 51, and in this case, a pressurizing pump may be provided, the water to be treated 43 may be supplied such that the water to be treated 43 is pressurized to the semi-permeable film 55, and the water molecules of the treatment water 43 may be moved to the circulating concentrated salt water 54 due to the reverse osmosis.

In addition, the supply speed of the water to be treated 43 may be the same as the supply speed of the circulating concentrated salt water 54, but preferably, the supply speed of the water to be treated 43 is faster than the supply speed of the circulating concentrated salt water 54.

From the viewpoint of suppressing the adhesion of a substance called scale, such as calcium carbonate, to the semi-permeable film 55 on the surface of the semi-permeable film 55 by concentrating the water to be treated 43, and extending the life of the semi-permeable film 55, the supply speed of the water to be treated 43 is preferably a speed at which the concentrated liquid 45 is discharged from the forward osmosis device 51 at a concentration at which scale does not occur. In addition, even when scales are generated, there is an effect that the scales attached to the semi-permeable film 55 can be removed by the water flow of the water to be treated 43.

The concentrated liquid 45, which is the residual water produced by the forward osmosis device 51, is supplied to the concentration unit 42, and the treated circulating concentrated salt water 54 is supplied to the reverse osmosis device 41 as the circulating diluted salt water 53.

As the semi-permeable film 55, the same semi-permeable film 13 as described in Embodiment 1 of the present invention can be applied.

### [Circulating salt water]

The circulating salt water 52 circulates between the forward osmosis device 51 and the reverse osmosis device 41, and becomes the circulating concentrated salt water 54 in the pipe L5 that supplies the circulating salt water 52 from the reverse osmosis device 41 to the forward osmosis device 51, and becomes the circulating diluted salt water 53 is provided in the pipe L4 that supplies the circulating salt water 52 from the forward osmosis device 51 to the reverse osmosis device 41.

That is, in the forward osmosis device 51, the circulating salt water 52 becomes the circulating diluted salt water 53 when the circulating concentrated salt water 54 receives the water molecules of the water to be treated 43 that permeated through the semi-permeable film 55, the circulating diluted salt water 53 is treated by the reverse osmosis device 41, and accordingly, the water molecules of the water to be treated 43 are produced as the treated water 44 (fresh water). Then, the treated circulating diluted salt water 53 becomes the circulating concentrated salt water 54, and is repeatedly supplied to the forward osmosis device 51.

The circulating salt water 52 is a solution having a salt that does not contain magnesium ion or calcium ion, which is an alkaline earth metal ion (divalent ion) serving as a scale, and for example, an aqueous sodium chloride solution is used. Since the circulating salt water 52 does not contain alkaline earth metal ions serving as scales, there is an effect that it is possible to suppress the adhesion of scales to the semi-permeable film 47.

### [Operation of carbonate production apparatus]

The operation of the carbonate production apparatus 500 will be described.

First, the water to be treated 43 is supplied to the forward osmosis device 51. This step is defined as a step of supplying the water to be treated to the forward osmosis device. In addition, the circulating concentrated salt water 54 is supplied to the forward osmosis device 51. This step is referred to as a circulating concentrated salt water supply step.

Next, the water to be treated 43 is forward-osmosis treated by the semi-permeable film 55 of the forward osmosis device 51 to produce the concentrated liquid 45 which is residual water and the circulating diluted salt water 53 treated with the circulating concentrated salt water 54. This step is referred to as a circulating salt water dilution treatment step.

With respect to the produced concentrated liquid 45, the same operation as that of the carbonate production apparatus 400 of the fourth embodiment is performed, the concentrated liquid 45 is supplied to the concentration unit 42 (concentrated liquid supply step), and further, in the concentration unit 42, the water-to-be-treated inflow step and the inflow pressurization step are performed, and a carbonate is produced.

The circulating diluted salt water 53 produced in the circulating salt water treatment step passes through the pipe L4, is pressurized by a pressurizing pump (not shown), and is supplied to the reverse osmosis device 41. This step is defined as a step of supplying the circulating diluted salt water to the reverse osmosis device.

Then, water molecules that have passed through the semi-permeable film 47 from the supplied circulating diluted salt water 53 are produced as the treated water 44 (fresh water). In addition, the treated circulating diluted salt water 53 is in a state where water molecules are reduced, and becomes the circulating concentrated salt water 54. This step is referred to as a circulating salt water concentration treatment step.

Then, the produced circulating concentrated salt water 54 is supplied to the forward osmosis device 51 via the pipe L5 and is used in the circulating concentrated salt water supply step.

In the first to fifth embodiments of the present invention, it is preferable to use seawater as the water to be treated 10 and 43, and the second chamber 12b of the first embodiment, the second chamber 12b after the second step of the second embodiment, and the second flow path 32b of the third to fifth embodiments correspond to the input part that inputs the concentrated liquid obtained by concentrating seawater to the osmosis water side of the semi-permeable film.

### Industrial Applicability

According to the present invention, a carbonate production apparatus and a carbonate production method can be used to produce a carbonate from a solution containing carbon dioxide and alkaline earth metal ions with less energy than concentration by heating and evaporation. In addition, it can be suitably used for immobilizing the amount of carbon dioxide in the atmosphere.

### Reference Signs List

100, 200, 300, 400, 500 Carbonate production apparatus
10 Water to be treated
11 Concentration unit
12 Treatment tank
12a First chamber
12b Second chamber
13 Semi-permeable film
14 Pressurizer
15 Concentrated liquid
16 Diluted liquid
17 Highly concentrated water to be treated
18 to 20 Missing number
21 First concentrated liquid
22 First diluted liquid
23 Second concentrated liquid
24 Second diluted liquid
25 Third concentrated liquid
26 Third diluted liquid
27 Fourth concentrated liquid
28 Fourth diluted liquid
29 to 30 Missing number
31 Concentration unit
32 Treatment tank
32a First flow path
32b Second flow path
32c Connection flow path
33 Semi-permeable film
34 Pressurizer
35 Concentrated liquid
36 Diluted liquid
41 Reverse osmosis device
42 Concentration unit
43 Water to be treated
44 Treated water
45 Concentrated liquid
46 Concentrated liquid supply unit
47 Semi-permeable film
51 Forward osmosis device
52 Circulating salt water
53 Circulating diluted salt water
54 Circulating concentrated salt water
L1, L2, L3, L4, L5 Pipe

## Claims

1. A carbonate production apparatus comprising:
a concentration unit that concentrates water to be treated containing carbon dioxide and alkaline earth metal ions by osmosis using a semi-permeable film.

2. The carbonate production apparatus according to claim 1, wherein
the concentration unit performs concentration by osmosis in multiple steps of a first step and a second step,
the first step includes a first concentration step of concentrating the water to be treated to produce a first concentrated liquid, and
the second step includes a second concentration step of concentrating the first concentrated liquid to produce a second concentrated liquid.

3. The carbonate production apparatus according to claim 1, wherein
the concentration unit includes a first flow path and a second flow path partitioned via the semi-permeable film,
the first flow path and the second flow path are connected to each other such that the water to be treated passes through the first flow path and then passes through the second flow path, and
the water to be treated is concentrated in the first flow path.

4. The carbonate production apparatus according to any one of claims 1 to 3, further comprising:
an input part that inputs a concentrated liquid obtained by concentrating seawater into an osmosis water side of the semi-permeable film.

5. The carbonate production apparatus according to claim 4, wherein
the concentrated liquid is concentrated by forward osmosis.

6. A carbonate production method comprising:
a concentration process of concentrating water to be treated containing carbon dioxide and alkaline earth metal ions by osmosis using a semi-permeable film.
